# EUROPEAN PATENT APPLICATION

(11) **EP 2 907 394 A1**
(43) Date of publication of application: **19.08.2015**
(21) Application number: 15153465.8
(22) Date of filing: 13.10.2005
(51) Int. Cl.: A23K 1/18, A23K 1/16, A23P 1/12, A23L 1/29

(54) **Regimens and methods adapted for a juvenile pet**

(30) Priority: 14.10.2004 US 618793 P
(62) Divisional of application: 05812567.5
(71) Applicant: The Procter & Gamble Company, Cincinnati, OH 45202 (US)
(72) Inventor: Norton, Sharon, Ann, CLAYTON, OH Ohio 45315 (US); Brent, John, Leslie, Jr., SPRINGBORO, OH Ohio 45066 (US); Koenig, John, William, CINCINNATI, OH Ohio 45247 (US)
(74) Representative: Schiweck, Weinzierl & Koch

(57) **Abstract**

Disclosed herein are dietary pet regimens comprising: (a) a first pet food; and (b) a second pet food; wherein the first pet food exhibits at least one visually distinctive characteristic relative to the second pet food and wherein the regimen is adapted for juvenile pets. Further disclosed are methods of administering a pet food comprising: (a) orally administering to a juvenile pet a first pet food during a first period of time; and (b) orally administering to the juvenile pet a second pet food during a second period of time; wherein the first pet food exhibits at least one visually distinctive characteristic relative to the second pet food.

## Description

### FIELD OF THE INVENTION

The present invention is directed to regimens and methods which are adapted for a juvenile pet, such as puppies or kittens. In particular, the regimens and methods address the unique aspects of the life stages of the juvenile pet such as changing nutritional needs or pet guardian responses to such changes.

### BACKGROUND OF THE INVENTION

Similar to human infants and toddlers, juvenile pets experience various growth stages up to the age of about 2 years. For example, a puppy of from birth up to 6 months of age has significant needs in the physical areas of immunity, digestion, bone and muscle growth, and brain development. As the puppy progresses from an age of from 6 months up to 12 months, early dental protection, management of weight gain, and sustained high activity become significant. Further, as the puppy progresses from an age of from 12 months up to 24 months, the puppy begins to mature and strengthening of joints and establishment of a lean body is significant. As such, it may not necessarily be desirable to feed the puppy the same type of pet food throughout these stage progressions.

By way of example, it is discovered herein that wherein a given stage of diet is fed to a pet of from birth up to 6 months of age, and a compositionally distinct stage of diet is fed to the pet at from 6 months up to 12 months of age, but these diets are not visually distinctive in any manner, the owner or other pet guardian may foster concerns over the differences in the diets and may view the diets as either radically different (and therefore providing no smooth transition for the juvenile pet) or not different in any respect (and therefore failing to indicate to the guardian that the nutritional needs of the stage of development of the juvenile pet are not being met). It is therefore discovered herein that nurturing of the juvenile pet through these various age progressions is enhanced through visual signals to the guardian of the juvenile pet that the dietary pet regimen is progressing in accordance with age of the juvenile pet.

The present invention is directed to providing the desired visual signals to the guardian of the juvenile pet.

### SUMMARY OF THE INVENTION

The present invention is directed to a dietary pet regimen comprising:
(a) a first pet food; and
(b) a second pet food;
wherein the first pet food exhibits at least one visually distinctive characteristic relative to the second pet food and wherein the regimen is adapted for juvenile pets.

Separately, the invention is further directed to a method of administering a pet food comprising:
(a) orally administering to a juvenile pet a first pet food during a first period of time; and
(b) orally administering to the juvenile pet a second pet food during a second period of time;
wherein the first pet food exhibits at least one visually distinctive characteristic relative to the second pet food.

### BRIEF DESCRIPTION OF THE FIGURES

Figures 1A and 1B illustrate a pet food of the present invention. Figure 1A illustrates a portion of a first pet food, having a substantially round shape and Figure 1B illustrates a portion of a second pet food, having a substantially oval shape.
Figures 2A - 2P illustrate non-limiting examples of visually distinctive shape characteristics.
Figures 3A and 3B illustrate a visually distinctive size characteristic between kibbles of a first pet food and kibbles of a second pet food. Figure 3A illustrates a first pet food and Figure 3B illustrates a second pet food.
Figures 4A, 4B, and 4B illustrate a first pet food, a second pet food, and a third pet food, respectively.

All shapes in the figures are depicted as two-dimensional for convenience; the ordinarily skilled artisan will understand that overall shape includes three-dimensional aspects.

### DETAILED DESCRIPTION OF THE INVENTION

Various documents including, for example, publications and patents, are recited throughout this disclosure. All such documents are hereby incorporated by reference.

All percentages and ratios are calculated by weight unless otherwise indicated. All percentages and ratios are calculated based on the total composition unless otherwise indicated.

Referenced herein are trade names for components including various ingredients utilized in the present invention. The inventors herein do not intend to be limited by materials under a certain trade name. Equivalent materials (*e.g.,* those obtained from a different source under a different name or reference number) to those referenced by trade name may be substituted and utilized in the descriptions herein.

In the description of the invention various embodiments or individual features are disclosed. As will be apparent to the ordinarily skilled practitioner, all combinations of such embodiments and features are possible and can result in preferred executions of the present invention.

The compositions herein may comprise, consist essentially of, or consist of any of the elements as described herein.

While various embodiments and individual features of the present invention have been illustrated and described, various other changes and modifications can be made without departing from the spirit and scope of the invention. As will also be apparent, all combinations of the embodiments and features taught in the foregoing disclosure are possible and can result in preferred executions of the invention.

As used herein, the term "juvenile pet" means a pet which is about 2 years of age or less.

As used herein, the term "pet" refers to means a domestic animal. Preferably, "pet" means a domestic dog, cat, rabbit, ferret, horse, cow, miniature pig, bird, or the like. More preferably, "pet" means a domestic dog or cat.

As used herein, the term "kitten" refers to a domestic cat which is about 2 years of age or less.

As used herein, the term "puppy" refers to a domestic dog which is about 2 years of age or less. Regimens and methods directed to puppies are particularly interesting herein.

As used herein, the term "Stage 1 pet" refers to a pet which is up to 6 months of age.

As used herein, the term "Stage 2 pet" refers to a pet which is from 6 months up to 12 months of age.

As used herein, the term "Stage 3 pet" refers to a pet which is from 12 months up to 24 months of age.

The present invention is directed to dietary pet regimens comprising a first pet food and a second pet food having at least one visually distinctive characteristic relative to each other, wherein the regimen is adapted for juvenile pets.

### The Dietary Pet Regimens of the Present Invention

The present dietary pet regimens comprise:
(a) a first pet food; and
(b) a second pet food;
wherein the first pet food exhibits at least one visually distinctive characteristic relative to the second pet food and wherein the regimen is adapted for juvenile pets.

The regimens may optionally further comprise a third pet food, optionally further a fourth pet food, and so on. The number of pet foods may optionally be dependent upon the number of growth stages that the provider of the regimen desires to address. In one embodiment herein, the regimens comprise a first pet food, a second pet food, and a third pet food, wherein the third pet food exhibits at least one of the visually distinctive characteristics relative to the first pet food and relative to the second pet food.

The regimens herein are adapted for juvenile pets, meaning that the regimens are formulated or marketed specifically for the nutritional needs or benefits of the juvenile pet. In one embodiment, this means that the regimens are formulated specifically for the nutritional needs of the juvenile pet. In another embodiment, this means that the regimens are marketed specifically for the nutritional needs of the juvenile pet.

The pet foods may be of any form or composition which is orally administrable. For example, the composition may be a nutritionally balanced pet food composition or a supplement. As used herein, the term "nutritionally balanced," with reference to a pet food, means that the pet food has known required nutrients to sustain life in proper amounts and proportion based on recommendations of recognized authorities in the field of pet nutrition. Forms of nutritionally balanced pet foods are readily known in the art, for example, dry foods, semi-moist foods, and wet foods. Supplements may include forms such as tablets, capsules, or the like, or other forms such as biscuits, chews, or other forms. While supplements are not typically nutritionally balanced, it is certainly acceptable if such supplements are nutritionally balanced.

In accordance with the present invention, the first pet food exhibits at least one visually distinctive characteristic relative to the second pet food. The visually distinctive characteristic is unlimited. It is desirable that the visually distinctive characteristic signals to the pet owner or other guardian that the dietary pet regimen is progressing with age of the juvenile pet. As such, optional visually distinctive characteristics include shape, size, or color.

The visually distinctive characteristic chosen may be dependent on a variety of factors, including the condition and/or age of the pet, the quality of the pet food, size of the pet, breed of the pet, or the like. For example, pet foods intended for Stage 1 puppies may comprise a smaller size kibble relative to pet food intended for Stage 3 puppies and, as such, the visually distinctive characteristic chosen may be size, wherein size is judiciously chosen dependent upon this factor.

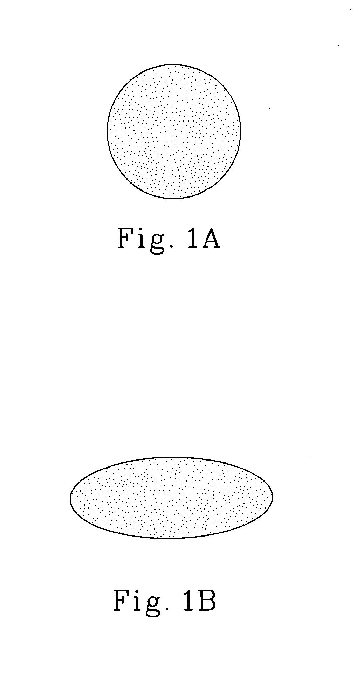

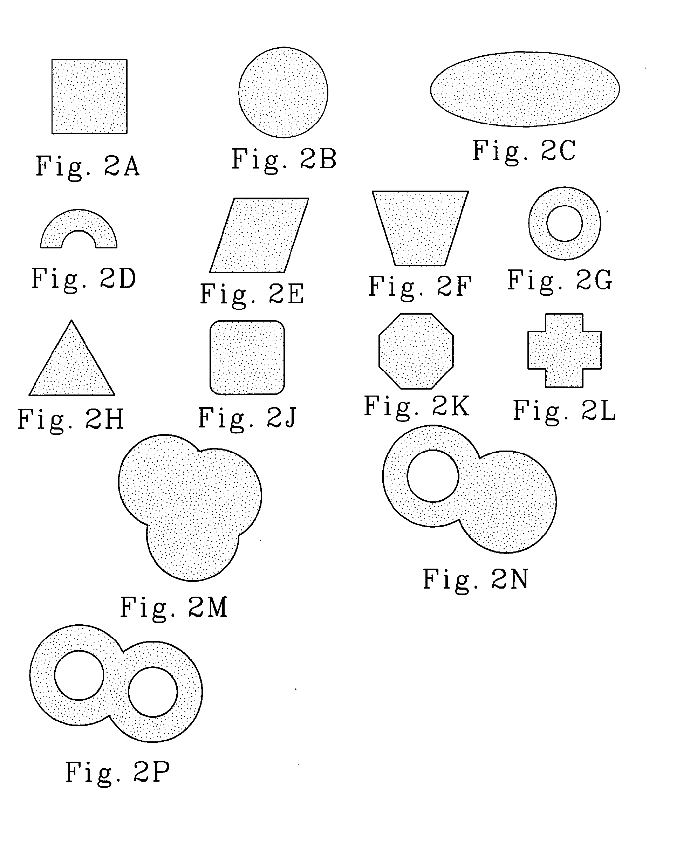

In an optional embodiment herein, at least a portion of a given pet food has finite shape, such as a kibble. In an additional or alternative embodiment, at least a portion of the first pet food and at least a portion of the second pet food has finite shape. In such embodiments, the visually distinctive characteristic (shape) between the first pet food and the second pet food may be readily visualized. To illustrate, in such an embodiment, at least a portion of the first pet food may have a finite, substantially round shape and at least a portion of the second pet food may have a finite, substantially oval shape, as indicated in Figure 1. Non-limiting examples of visually distinctive shape characteristics are shown in Figure 2.

While some of the shapes depicted in the figures are of perfect symmetry, the finite shapes may be regular (*e.g.,* perfect symmetry, for example a perfect triangle), substantially regular, or irregularly shaped. As an example, substantially triangular kibbles are known in the art (*e.g.,* certain IAMS® cat foods, commercially available from The Iams Company, Dayton, Ohio); in practice, these kibbles are only substantially regular (meaning, visually approximating a triangular shape but certainly not perfect with respect to actual linear or angular design).

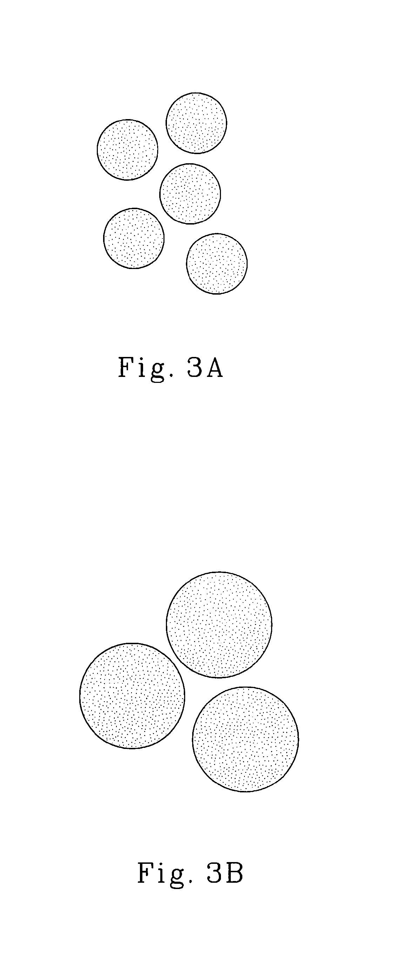

In an optional embodiment herein, the first pet food exhibits at least one visually distinctive characteristic relative to the second pet food, wherein the visually distinctive characteristic is size. In this embodiment, at least a portion of the first pet food exhibits a different size relative to at least a portion of the second pet food. To illustrate, each of the first pet food and the second pet food may comprise a plurality of components such as kibbles. To further the illustration, at least a portion of the kibbles of the first pet food and at least a portion of the kibbles of the second pet food may be of different size. In such an illustration, the visually distinctive characteristic (size) between the first pet food and the second pet food may be readily visualized, as indicated in Figure 3.

In an optional embodiment herein, the first pet food exhibits at least one visually distinctive characteristic relative to the second pet food, wherein the visually distinctive characteristic is color. In this embodiment, at least a portion of the first pet food exhibits a different color relative to at least a portion of the second pet food. In this embodiment, color may be differentiated merely with respect to hue (for example, the visually distinctive color characteristic may be due to a shade of brown exhibited by at least a portion of the first pet food relative to a different shade of brown exhibited by at least a portion of the second pet food) or may be more radically different (for example, the visually distinctive color characteristic may be due to a brown color exhibited by at least a portion of the first pet food relative to a yellow color exhibited by at least a portion of the second pet food). To illustrate, each of the first pet food and the second pet food may comprise a plurality of components such as kibbles. To further the illustration, at least a portion of the kibbles of the first pet food and at least a portion of the kibbles of the second pet food may be of different color. In such an illustration, the visually distinctive characteristic (color) between the first pet food and the second pet food may be readily visualized.

Other visually distinctive characteristics will be readily understood in the art.

The dietary pet regimens of the present invention may be presented, for example to the owner or other guardian, in any of a variety of different manners.

For example, in one embodiment, the dietary pet regimen may be a kit wherein each aspect of the regimen is co-packaged or otherwise co-presented to the guardian for purchase or other means of attainment. As an example wherein the regimen is a co-packaged kit, the regimen may comprise the first pet food contained within a first containing device (such as a sealed bag) and the second pet food contained within a second containing device (such as a sealed bag), wherein the first containing device and the second containing device are in some manner in close physical proximity or even releasably joined to or touching each other. To illustrate, a third containing device (such as a sealed box) may contain both the first containing device and the second containing device. As another illustration, the first containing device and the second containing device may be wrapped in a plastic or other thin, flexible material.

In another embodiment, the dietary pet regimen may be a 'line-up' of pet foods presented to the pet owner or other guardian for purchase or other means of attainment, such as physically in a grocery store, club store, drug store, pet specialty store, veterinary office, or other physical location, *via* written direction (*e.g.,* through written direction from, for example, a veterinarian or other health professional (*e.g.,* scripts), *via* sales professionals or organizations (*e.g.,* through, for example, marketing brochures, pamphlets, or other instructive paraphernalia), written media (*e.g.,* internet, electronic mail, or other computer-related media), or any other means of presentation.

For example, the 'line-up' may market or otherwise present the first pet food as a pet food suitable for a certain age stage of pet (such as for a Stage 1 pet), close in physical proximity to the second pet food which is marketed or otherwise presented as a pet food suitable for a different age stage of the pet (such as for a Stage 2 pet). As another example, written media *via* a designated internet site may communicate the identity of the regimen, for example, the attributes of the first pet food relative to the second pet food and the recommended uses of the pet foods dependent upon the age stage of the relevant pet.

### The Methods of the Present Invention

The present methods comprise:
(a) orally administering to a juvenile pet a first pet food during a first period of time; and
(b) orally administering to the juvenile pet a second pet food during a second period of time;
wherein the first pet food exhibits at least one visually distinctive characteristic relative to the second pet food.

Visually distinctive characteristics are as described herein above.

As used herein with respect to the methods of the present invention, the terms "orally administering," "oral administration" or the like means that the referenced pet ingests or is directed to ingest (interpreted broadly as including mere provision of the pet food to the pet) the pet foods, or the owner or other guardian of such pet is directed to provide the pet foods to the pet. Wherein the guardian is directed to provide, such direction may optionally comprise that which instructs or otherwise informs the guardian that use of the pet foods may and/or will provide one or more of the benefits described herein, such as promotion of puppy health or nutrition, promotion of puppy health or nutrition over any of a variety of stages of puppy life, and combinations thereof, including the like.

For example, such direction may be oral direction (*e.g.,* through oral instruction from, for example, a veterinarian, other health professional, sales professional or organization, and/or radio or television media (*i.e.,* advertisement) or written direction (*e.g.,* through written direction from, for example, a veterinarian or other health professional (*e.g.,* scripts), sales professional or organization (*e.g.,* through, for example, marketing brochures, pamphlets, or other instructive paraphernalia), written media (*e.g.,* internet, electronic mail, or other computer-related media), and/or containing devices associated with the composition (*e.g.,* a label present on a containing device containing the pet foods).

The first pet food is orally administered to the juvenile pet during a first period of time, and the second pet food is orally administered to the juvenile pet during a second period of time. Wherein the methods further comprise oral administration of optionally a third pet food, optionally a fourth pet food, or so on, then the third pet food is administered during a third period of time, the fourth pet food is administered during a fourth period of time, and so on. As used herein, the term "during" with reference to the period of time is not intended to mean that the referenced pet food must be administered, for example, exclusively, daily, or even regularly, over the entire period of time. Rather, wherein a pet food is orally administered during a referenced period of time, the pet food is orally administered on at least one occasion over the entire period of time.

The various periods of time may overlap or may be discontinuous relative to each other. For example, wherein the first pet food is orally administered to a Stage 1 pet which is a puppy, the first pet food may be exclusively orally administered up to 6 months of age; on the first day of the puppy's six month, the second pet food may be exclusively orally administered to the puppy up to 12 months of age. As another example, wherein the first pet food is orally administered to a Stage 1 pet which is a puppy, the first pet food may be predominantly orally administered up to 6 months of age; during the last few weeks of the puppy's full fifth month of age, the first pet food may be admixed with the second pet food or perhaps alternately administered to further transitional purposes.

During the relevant period of time, the relevant pet food may be administered in accordance with a variety of frequencies or durations. For example, wherein the pet food is intended for daily feed, the pet food is typically administered from once daily to about four times daily, alternately from once daily to about three times daily, alternately from once daily to about two times daily, alternately *ad libitum.* However, daily administration is not necessary for any of the pet foods herein. For example, supplements may or may not be provided daily, or may be administered multiple times daily.

### Optional Components of Pet Foods

Pet foods are commonly understood in the art. Non-limiting components of pet foods which are optional for inclusion in the pet foods are described herein as merely illustrative. For example, pet food intended for daily feed are preferably nutritionally balanced. In one embodiment, such pet food compositions may comprise, on a dry matter basis, from about 20% to about 50% protein, or from about 22% to about 40% protein, by weight of the pet food. As another example, the pet foods may comprise, on a dry matter basis, from about 5% to about 35% fat, or from about 10% to about 30% fat, by weight of the pet food. In another embodiment, supplements such as biscuits, chews, bars, and other such forms may comprise, on a dry matter basis, from about 20% to about 50% protein, or from about 22% to about 40% protein, by weight of the supplement. As another example, these types of supplements may comprise, on a dry matter basis, from about 5% to about 35% fat, or from about 10% to about 30% fat, by weight of the supplement.

### Non-Limiting Examples

The following examples are provided to illustrate the invention and are not intended to limit the scope thereof in any manner.

### Example 1

A dietary pet regimen in accordance with the present invention comprises the following pet foods:
(a) a first pet food comprising at least one of: an antioxidant for immunity, docosahexaenoic acid for brain development, and fructooligosaccharide for digestive health;
(b) a second pet food comprising a polyphosphate for dental protection; and
(c) a third pet food comprising at least one of chondroitin for joint health, glucosamine for joint health, and elevated protein for optimal body condition.

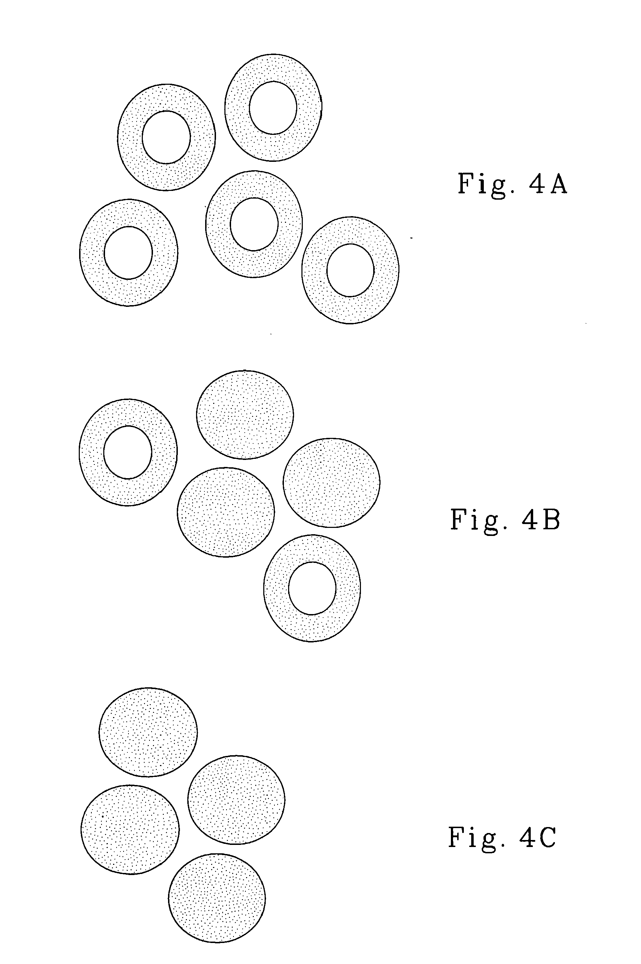

The regimen is adapted for a juvenile pet which is a large breed puppy. The first pet food exhibits at least one visually distinctive characteristic relative to each of the second pet food and the third pet food. The second pet food exhibits at least one visually distinctive characteristic relative to the third pet food. In particular, each pet food is in the form of kibbles wherein the kibbles exhibit the size and shape characteristics as indicated in Figure 4. Transition is particularly aided due to the second pet food which comprises kibbles exhibiting substantially similar size and shape kibbles relative to the first pet food as well as kibbles exhibiting substantially similar size and shape kibbles relative to the third pet food. This transition is aided while still indicating the differences among the three pet foods.

The first pet food is contained in a sealed bag and bears labeling information indicating that the food is useful for oral administration to a Stage 1 pet (wherein the information is expressed in a manner which an ordinary pet guardian understands). The second pet food is contained in a sealed bag and bears labeling information indicating that the food is useful for oral administration to a Stage 2 pet (wherein the information is expressed in a manner which an ordinary pet guardian understands). The third pet food is contained in a sealed bag and bears labeling information indicating that the food is useful for oral administration to a Stage 3 pet (wherein the information is expressed in a manner which an ordinary pet guardian understands).

A plurality of the containing devices each containing the first pet food is placed on a grocery store shelf. A plurality of the containing devices each containing the second pet food is placed on the same grocery store shelf. A plurality of the containing devices each containing the third pet food is placed on the same grocery store shelf.

### Example 2

The large breed puppy indicated in Example 1 is orally administered the first pet food, second pet food, and third pet food of Example 1 in accordance with the following schedule:
The first pet food is administered to the puppy three or four times daily subsequent to weaning up to the age of 6 months.
The second pet food is administered to the puppy two or three times daily from the age of 6 months up to the age of 12 months; from the age of 6 months up to the age of 12 months, the puppy is administered the second pet food once daily and the third pet food once or twice daily.
The third pet food is administered to the puppy twice daily from the age of 12 months up to the age of 24 months.

### Example 3

Dietary pet regimens for each of small breed puppies, medium breed puppies, and large breed puppies are made available, wherein each regimen comprises a first pet food, a second pet food, and a third pet food, primarily intended for puppies which are Stage 1 pets, Stage 2 pets, and Stage 3 pets, respectively, as follows:

Regimens A. Each pet food comprises a plurality of kibbles which are of substantially similar shape, in particular, substantially round. Indicated diameters and thicknesses are for each kibble, and are approximations only for each kibble. Indicated diameter is the approximate longest diameter of a kibble (for example, the kibble may not be perfectly round; the ordinarily skilled artisan will recognize that a longest diameter may be approximated). Indicated thickness is the approximate longest thickness of a kibble (for example, the kibble may not have uniform thickness; the ordinarily skilled artisan will recognize that a longest thickness may be approximated).

| | **Dietary Pet Regimen for Small Breed** | | **Dietary Pet Regimen for Medium Breed** | | **Dietary Pet Regimen for Large Breed** | |
|---|---|---|---|---|---|---|
| **Pet Food** | **Diameter, mm** | **Thickness, mm** | **Diameter, mm** | **Thickness, mm** | **Diameter, mm** | **Thickness, mm** |
| First Pet Food | 3.6 | 5 | 8 | 7 | 12.5 | 8 |
| Second Pet Food* | 3.6 and 10.5 | 5 | 8 and 12 | 7 | 12.5 and 16 | 8 |
| Third Pet Food | 10.5 | 5.5 | 12 | 7 | 16 | 7 |

| | | | | | | |
|---|---|---|---|---|---|---|
| *The second pet food comprises a 1:1 ratio of kibbles having the indicated dimensions, by weight of the total second pet food; for example, the second pet food of the dietary pet regimen for the small breed puppy comprises a 1:1 ratio of kibbles having a diameter of 3.6 mm and kibbles having a diameter of 10.5 mm (all approximated for each kibble), by weight of the total second pet food. | | | | | | |

Regimens B. Each pet food comprises a plurality of kibbles which are of substantially similar shape, in particular, substantially four-sided (for example, substantially square or substantially round). Indicated widths and thicknesses are for each kibble, and are approximations only for each kibble. Indicated widths are the approximate longest measurement of each of four sides of a kibble. Indicated thickness is the approximate longest thickness of a kibble (for example, the kibble may not have uniform thickness; the ordinarily skilled artisan will recognize that a longest thickness may be approximated).

| | **Dietary Pet Regimen for Small Breed** | | **Dietary Pet Regimen for Medium Breed** | | **Dietary Pet Regimen for Large Breed** | |
|---|---|---|---|---|---|---|
| **Pet Food** | **Widths, mm** | **Thickness, mm** | **Widths, mm** | **Thickness, mm** | **Widths, mm** | **Thickness, mm** |
| First Pet Food | 3.5 | 5 | 8 | 7 | 13 | 8 |
| Second Pet Food* | 3.5 and 11 | 5 | 8 and 12 | 7 | 13 and 16 | 8 |
| Third Pet Food | 11 | 6 | 12 | 7 | 16 | 7 |

| | | | | | | |
|---|---|---|---|---|---|---|
| *The second pet food comprises a 1:1 ratio of kibbles having the indicated dimensions, by weight of the total second pet food; for example, the second pet food of the dietary pet regimen for the small breed puppy comprises a 1:1 ratio of kibbles having widths of 3.5 mm and kibbles having widths of 11 mm (all approximated for each width of each kibble), by weight of the total second pet food. | | | | | | |

All documents cited in the Detailed Description of the Invention are, in relevant part, incorporated herein by reference; the citation of any document is not to be construed as an admission that it is prior art with respect to the present invention.

## Claims

1. A dietary pet regimen **characterized by**:
(a) a first pet food; and
(b) a second pet food;
wherein the first pet food exhibits at least one visually distinctive characteristic relative to the second pet food and wherein the regimen is adapted for juvenile pets.

2. The regimen according to Claim 1 wherein at least one visually distinctive characteristic is selected from the group consisting of shape, size, and color.

3. The regimen according to any of the preceding claims wherein the first pet food and the second pet food each comprise extruded kibble.

4. The regimen according to any of the preceding claims wherein at least one visually distinctive characteristic is shape.

5. The regimen according to any of the preceding claims wherein at least one visually distinctive characteristic is size.

6. The regimen according to any of the preceding claims wherein at least one visually distinctive characteristic is color.

7. The regimen according to any of the preceding claims wherein the first pet food exhibits at least two visually distinctive characteristics relative to the second pet food, wherein at least two of the characteristics are selected from the group consisting of shape, size, and color.

8. A method of administering a pet food comprising:
(a) orally administering to a juvenile pet a first pet food during a first period of time; and
(b) orally administering to the juvenile pet a second pet food during a second period of time;
wherein the first pet food exhibits at least one visually distinctive characteristic relative to the second pet food.

9. The method according to Claim 8 wherein at least one visually distinctive characteristic is selected from the group consisting of shape, size, and color.

10. The method according to Claim 9 wherein the first pet food and the second pet food each comprise extruded kibble.
